# EUROPÄISCHE PATENTANMELDUNG

(11) **EP 0 525 406 A1**
(43) Veröffentlichungstag der Anmeldung: **03.02.1993**
(21) Anmeldenummer: 92110946.8
(22) Anmeldetag: 29.06.1992
(51) Int. Cl.: B23D 21/04, B23B 31/14

(54) **Rohrtrennmaschine**

(30) Priorität: 17.07.1991 DE 4123628
(71) Anmelder: BÜLTMANN, Monika, D-58809 Neuenrade (DE)
(72) Erfinder: Bültmann, Rudolf, W-5982 Neuenrade 2 (DE)
(74) Vertreter: Fritz, Edmund Lothar, Dipl.-Chem.

(57) **Zusammenfassung**

Ein festgehaltenes Rohr (1) soll durch umlaufende radial angeordnete Trennwerkzeuge (15) getrennt werden. Die Trennwerkzeuge befinden sich an einem rotierenden Werkzeugträger (12) mit Hauptantrieb (18). Jedes Werkzeug ist an einem radial verschiebbaren Schlitten (14) angebracht mit einer Spindel (22). Eine Hohlwelle (20) des Vorschuborgans ist koaxial zum Werkzeugträger angeordnet und steht über Zahnräder mit dem Ausgang (24) eines Ausgleichsgetriebes in Verbindung. Das Ausgleichsgetriebe kann über einen Servomotor (27) mittels eines Ausgleichsglieds (26) so gesteuert werden, daß Werkzeugträger und Hohlwelle sich synchron drehen, so daß kein Vorschub stattfindet, oder daß durch Geschwindigkeitsdifferenzen ein Vorschub oder eine Rückbewegung der Werkzeugschlitten bewirkt wird. Da für die Servosteuerung eine geringe Kraft erforderlich ist, gestaltet sich der Vorschub besonders präzise.

## Beschreibung

Die Erfindung bezieht sich auf eine Rohrtrennmaschine mit den Merkmalen nach dem Oberbegriff des Hauptanspruchs.

Die Erfindungsaufgabe ist darin zu sehen, eine Rohrtrennmaschine dieser Art so auszubilden, daß der radiale Vorschub der die Trennwerkzeuge tragenden Werkzeugschlitten mit höchster Präzision gegebenenfalls elektronisch gesteuert werden kann.

Diese Aufgabe wird im Prinzip durch eine Rohrtrennmaschine mit den Merkmalen nach dem Hauptanspruch gelöst. Die Unteransprüche haben bevorzugte konstruktive Ausführungen und prinzipielle Weiterbildungen dieser Lösung zum Inhalt.

Bei einer solchen Rohrtrennmaschine ist als wesentliches Vorschuborgan ein Element vorgesehen, das koaxial zu dem sich drehenden Werkzeugträger angeordnet ist, und das einerseits getrieblich mit den Werkzeugschlitten verbunden ist, andererseits mit dem Ausgang eines Ausgleichsgetriebes in Verbindung steht, das seinerseits vom Hauptantrieb angetrieben wird. Dabei ist die Anordnung so getroffen, daß bei Stillstand eines Ausgleichsgliedes dieses Ausgleichgetriebe eine synchrone Drehung des Vorschuborganes und des Werkzeugträgers stattfindet, so daß die die Werkzeuge tragenden Schlitten stillstehen. Ein Vorschub derselben bzw. eine Rückbewegung findet jedoch dann statt, wenn das Vorschuborgan und der Werkzeugträger sich mit unterschiedlichen Geschwindigkeiten drehen, was in beliebigen Richtungen durch Drehung des Ausgleichgliedes mit einem Servomotor bewirkt werden kann. Dabei werden die Kräfte für den Vorschub allein durch den Hauptantrieb des Werkzeugträgers aufgebracht, d. h., daß durch den das Ausgleichsglied drehenden Servomotor keinerlei Kräfte aufgebracht werden können, so daß von dieser Stelle aus Vorschub und Rückbewegung präzise und in Anpassung an die jeweilige Trennvorgänge gesteuert werden können. Insbesondere kann dabei die Steuerung elektronisch erfolgen.

Beim Trennen kann mit hohen Umlaufgeschwindigkeiten des Werkzeugträgers von 1.500 Umdrehungen pro Minute und mehr gearbeitet werden. Man kann auch bei Rohren von relativ großem Durchmesser (beispielsweise 100 mm Durchmesser) Schnittzeiten von 3 Sekunden erreichen. Auch die qualitative Leistung einer Maschine nach der Erfindung kann durch die Präzision der Vorschubregulierung gesteigert werden im Hinblick auf die Verbesserung der Schnittfläche bei hochqualifizierten Stählen. Die Präzision der Vorschubregulierung wirkt sich auch günstig auf die Lebensdauer der Werkzeuge aus.

Anspruch 2 hat eine bevorzugte konstruktive Ausführungsform des Vorschuborgans zum Inhalt.

Anspruch 3 betrifft eine bevorzugte Weiterbildung durch die Anordnung von Gewichten auf dem Werkzeugträger in der Weise, daß die auf sie im Betrieb einwirkende Fliehkraft zur Unterstützung des Vorschub der Werkzeugschlitten genutzt wird.

Anspruch 4 bezieht sich auf eine bevorzugte konstruktive Ausführungsform zur Kompensation der Fliehkräfte. Durch zusätzliche Fliehkraftgewichte an der Scheibe werden hydraulische oder pneumatische Druckkräfte erzeugt und über Leitungen zu Gegengewichten überführt, wo sie den auf die Werkzeugschlitten wirkenden Fliehkräfte entgegenwirken und dadurch die Vorschubelemente entlasten. Dadurch kann die Rohrtrennmaschine bei extrem hohen Umdrehungen ohne Überbelastung gefahren werden.

Anspruch 5 bezieht sich auf eine konstruktive Ausführungsform zur Kompensation der Fliehkräfte mit einer mechanischen Druckübertragung.

Im folgenden wird ein Ausführungsbeispiel der Erfindung beschrieben unter Bezugnahme auf die beiliegenden Zeichnungen.

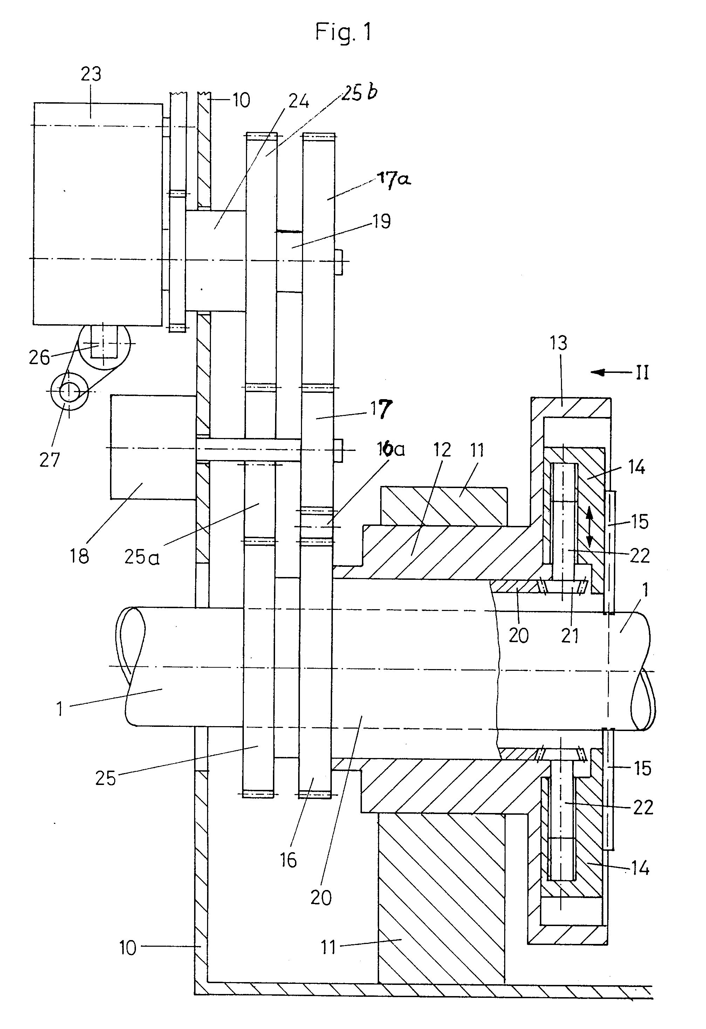

Fig. 1 ist eine Prinzipskizze einer Rohrtrennmaschine nach der Erfindung insgesamt quer zur Rohrachse gesehen;
Fig. 2 ist im Prinzip eine Darstellung der Draufsicht nach 11 von Fig. 1;
Fig. 3 stellt im Prinzip die mechanische Druckübertragung zur Kompensation der Fliehkräfte dar.

Die Maschine dient dem Zweck ein Rohr 1 schnell und sauber in Querrichtung zu trennen. Dabei ist das Rohr in einer nicht dargestellten Haltevorrichtung eines Maschinengestells 10 festgehalten. Die Trennung erfolgt durch zwei radial angeordnete Trennwerkzeuge 15, die beim Trennen umlaufen und dabei in radialer Richtung vorgeschoben werden. Aufgrund dieser Funktion ist ein Antrieb für den Umlauf und einer für den Vorschub erforderlich.

Die Trennwerkzeuge 15 sind jeweils an einem Werkzeugschlitten 14 befestigt, der radial verschiebbar an einer Scheibe 13 eines Werkzeugträgers 12 befestigt ist. Dieser ist mit seiner Nabe drehbar in einem Lager 11 als Teil des Maschinengestell gelagert. Der Antrieb des Werkzeugträgers erfolgt durch einen Hauptantrieb 18 über Zahnräder 17, 16a und 16.

Die Werkzeugschlitten 14 nehmen jeweils unverschiebbare eine Spindel 22 mit einem Kegelrad 21 auf. Die beiden Kegelräder stehen in Eingriff mit der konischen Verzahnung einer Hohlwelle 20, die drehbar in der Nabe des Werkzeugträgers 12 gelagert ist.

Die Hohlwelle ist über Zahnräder 25, 25a, 25b mit dem Ausgang 24 eines Ausgleichsgetriebes 23 verbunden, wobei der Eingang 19 dieses Ausgleichsgetriebes durch die Zahnräder 17 und 17a vom Hauptantrieb 18 angetrieben wird. Das Ausgleichsgetriebe hat einen zweiten Eingang (Ausgleichglied 26) für dessen Antrieb ein Servomotor 27 vorgesehen ist.

Die getrieblichen Verbindungen sind so ausgelegt, daß bei Stillstand des Ausgleichsgliedes 26 Werkzeugträger 12 und Hohlwelle 20 synchron umlaufen, was zur Folge hat, daß keine Umdrehungen auf die Kegelräder 21 übertragen werden, d. h. diese und die Spindel stehen still und es findet kein Vorschub statt. Wird jedoch der Servomotor 27 angestellt, und das Ausgleichsglied 26 in der einen oder anderen Richtung bewegt, dann stellt sich zwischen Werkzeugträger und Hohlwelle 20 ein mehr oder weniger großer Unterschied in der Umdrehungszahl ein, wodurch die Spindeln 22 in Drehung versetzt werden und die Werkzeugschlitten 14 in der einen oder anderen Richtung bewegt werden. Die Geschwindigkeit und Beschleunigung des Vorschubs bzw. der Rückbewegung können somit allein durch den Servomotor 27 mit geringem Kraftaufwand gesteuert werden.

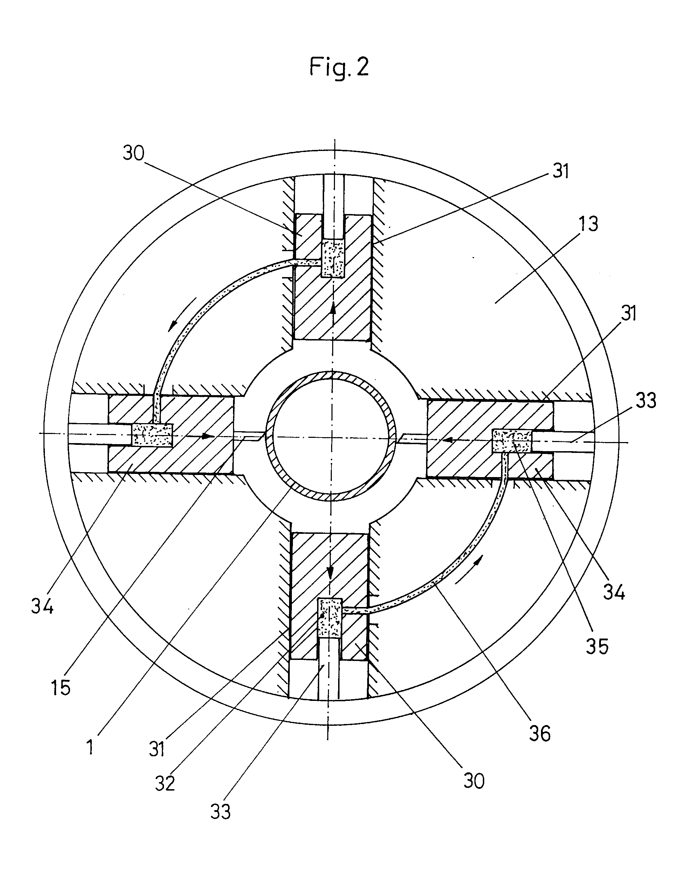

Fig. 2 zeigt Einrichtungen, die dazu dienen, die Vorschubelemente bei hohen Umdrehungen zu entlasten. Dabei sind zwei Fiehkraftgewichte 30 radial verschiebbar in Führungen 31 gelagert in einer 90"-Anordnung zu den Vorschubelementen der Trennwerkzeuge 15. An den Fliehkraftgewichten 30 sind Druckräume 32 zur Aufnahme eines hydraulischen oder pneumatischen Druckmediums gebildet. In diese Druckräume ragen jeweils in radialer Anordnung Kolben 33, die an der Scheibe 13 fest abgestützt sind.

Mit den Trennwerkzeugen 15 sind jeweils Gegengewichte (Schlitten) 34 fest verbunden, die ebenfalls Druckräume 35 aufweisen mit aufgenommenen Kolben 33. Jeweils ein Druckraum 32 eines Fliehkraftgewichtes steht über eine Leitung 36 mit einem Druckraum eines Schlittens 34 in Verbindung.

Wenn sich die Scheibe dreht, schieben sich die Fliehkraftgewichte 30 radial nach außen. Das Druckmedium wird unter Druck gesetzt, der sich über die Leitungen 30 in die Druckräume 35 der Schlitten fortsetzt, wo ein zentripetal wirkender Gegendruck erzeugt wird entgegen der Fliehkraft, so daß dadurch die Vorschubelemente der Werkzeugschlitten entlastet werden.

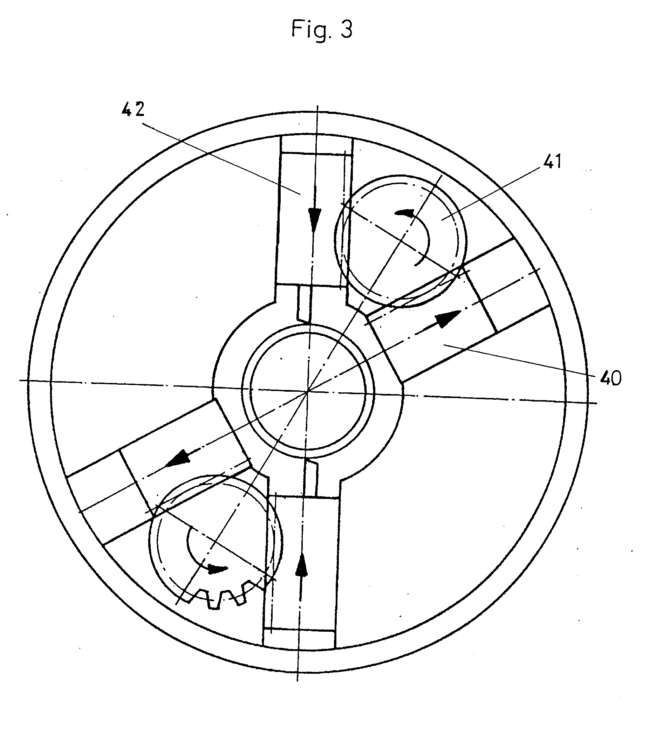

Bei der mechanischen Druckübertragung nach Fig. 3 sind zwei radiale Fliehkraftgewichte 40 vorgesehen, mit Führungen in einer spitzwinkligen Anordnung zu den ebenfalls radial geführten Gegengewichten 42, die mit den Trennwerkzeugen in Verbindung stehen. In der Winkelhalbierenden ist jeweils ein Zahnrad 41 gelagert, das einerseits mit einer linearen Verzahnung am Fliehkraftgewicht 40 und andererseits mit einer linearen Verzahnung im Gegengewicht 42 in Eingriff steht, so daß auf diese Weise die Entlastung der Fliehkraft über eine mechanische Verbindung erfolgt.

## Patentansprüche

1. Rohrtrennmaschine mit den Merkmalen:
- sie hat eine Vorrichtung um Festhalten des zu schneidenden Rohres;
- sie hat einen umlaufenden Werkzeugträger mit zumindest einem radial verschiebbaren Trennwerkzeug;
gekennzeichnet durch die nachfolgenden weiteren Merkmale:
- dem umlaufenden Werkzeugträger (12) ist in achsgleicher Anordnung, gleichfalls umlaufend ein Vorschuborgan (20) zugeordnet, das einerseits getrieblich mit dem oder den Werkzeugschlitten (14), welche die Trennwerkzeuge tragen, in Verbindung steht, und das andererseits getrieblich an den Ausgang eines Ausgleichsgetriebes (23) angeschlossen ist, das von dem den Werkzeugträger antreibenden Hauptantrieb (18) angetrieben wird und ein von einem Servomotor (27) angetriebenes Ausgleichsglied (26) aufweist;
- die getrieblichen Verbindungen sind so ausgelegt, daß bei Stillstand des Ausgleichsgliedes (26) Vorschuborgan (20) und Werkzeugträger (12) synchron umlaufen, so daß ein Vorschub unterbleibt, und daß bei Drehung des Ausgleichsgliedes in der einen oder anderen Richtung ein Vorschub bzw. eine Rückbewegung bewirkt wird.

2. Rohrtrennmaschine nach Anspruch 1, gekennzeichnet durch die nachfolgend genannten Merkmale:
- das Vorschuborgan besteht aus einer von einer Nabe des Werkzeugträgers (12) drehbar aufgenommenen Hohlwelle (20);
- die Werkzeugschlitten (14), an denen die Trennwerkzeuge (15) befestigt sind, nehmen unverschiebbar jeweils eine Spindel (22) auf, mit jeweils einem Kegelrad (21), das mit einer entsprechenden Verzahnung der Hohlwelle (20) in Eingriff steht.

3. Rohrtrennmaschine nach Anspruch 1, dadurch gekennzeichnet, daß am Werkzeugträger (12) den Werkzeugschlitten (14) Gewichte (30) zugeordnet sind, jeweils mit einer Druckaufnahme zur Aufnahme des durch die Fliehkraft entstehenden Druckes mit Druckübertragungselementen zur Weitergabe des Druckes an einen Werkzeugschlitten (14) zwecks Unterstützung des Vorschubs.

4. Rohrtrennmaschine nach Anspruch 3, gekennzeichnet durch die nachfolgend genannten Merkmale:
- es sind zwei Fliehkraftgewichte (30) vorgesehen, jeweils in 90 ° -Anordnung zum Vorschub der Werkzeugschlitten, radial verschiebbar gelagert mit einem Druckraum (32) in den jeweils ein ortsfest an der Scheibe befestigter Druckmittelkolben (33) hineinragt;
- jeder Werkzeugschlitten ist mit einem Gegengewicht (34) verbunden, gleichfalls radial verschiebbar mit einem Druckraum (35), der jeweils einen festgehaltenen Druckkolben (33) aufnimmt;
- es ist jeweils ein Druckraum (32) eines Fliehkraftgewichtes über eine Leitung (36) mit dem Druckraum (35) eines Gegengewichtes verbunden.

5. Rohrtrennmaschine nach Anspruch 3, gekennzeichnet durch die nachfolgend genannten Merkmale:
- es sind zwei einander gegenüberliegende, jeweils radial geführte Fliehkraftgewichte (40) vorgesehen, in einer spitzwinkligen Anordnung zu den gleichfalls radial geführten einander gegenüberliegenden Gegengewichten (42), die jeweils mit einem Trennwerkzeug in Verbindung stehen;
- für die Druckübertragung ist jeweils ein Zahnrad (41) vorgesehen, das auf der Winkelhalbierenden zwischen den beiden Führungen gelagert ist und einerseits mit einer linearen Verzahnung des Fliehkraftgewichtes und andererseits mit einer linearen Verzahnung des Gegengewichtes in Eingriff steht.
